# EUROPÄISCHE PATENTSCHRIFT

(11) **EP 1 902 981 B1**
(45) Veröffentlichungstag und Bekanntmachung des Hinweises auf die Patenterteilung: **26.11.2008**
(21) Anmeldenummer: 06400030.0
(22) Anmeldetag: 25.09.2006
(51) Int. Cl.: B65G 47/88

(54) **Anschlagmodul**
Stop module
Module butée

(43) Veröffentlichungstag der Anmeldung: 26.03.2008
(73) Patentinhaber: Wörner, Helmut, 73770 Denkendorf (DE); Unterhuber, Sebastian, 73257 Köngen (DE)
(72) Erfinder: Unterhuber, Sebastian, 73257 Köngen (DE)
(74) Vertreter: Vogler, Bernd

(56) Entgegenhaltungen:
- EP-A2- 1 522 383
- WO-A-00/46134
- DE-A1- 3 229 191
- FR-A- 2 856 998
- US-A1- 2003 173 187

## Beschreibung

Die Erfindung betrifft ein Anschlagmodul, insbesondere für automatische Bearbeitungs- und Fördereinrichtungen, mit einem an einer Grundeinheit angeordneten Anschlagglied für sich in einer Bewegungsebene in einer aktuellen Arbeitsbewegungsrichtung bewegende Gegenstände, das mittels eines Stellglieds zwischen einer in der Bewegungsebene befindlichen Anschlagstellung und einer unterhalb der Bewegungsebene liegenden Freigabestellung bewegbar ist, wobei das Stellglied ein Antriebselement zur Erzeugung einer parallel zur Bewegungsebene gerichteten linearen Antriebsbewegung aufweist, die über eine Hebelein- richtung in eine zwischen der Anschlagstellung und der Freigabestellung des Anschlagglieds stattfin- denden Auf- bzw. Abwärtsbewegung umsetzbar ist, wobei die He- beleinrichtung einen durch das Antriebselement be- wegbaren ersten Hebel aufweist, der um eine erste Schwenkachse schwenkbar ist und an einem zweiten Hebel gelenkig gelagert ist, wobei Letzterer gelenkig am An- schlagglied gelagert ist .

In der EP 1 522 383 ist ebenfalls ein Anschlagmodul offenbart. Der in den Figuren gezeigte stopper wird über ein Kniegelenk Von einem Stellement unter die Arbeitsebene bewegt.

Weitere Anschlag module sind in den Dokumenten FR 2 856 998 und Wo 00/46134 offenbart.

Ein Anschlagmodul ist auch aus der EP 0 484 648 bekannt. Der dort beschriebene Anschlag ist mittels eines pneumatisch betätigbaren Stellkolbens aus der Bewegungsbahn anfahrender Werkstücke heraus und diese zurückbewegbar. Für die Druckluftbeaufschlagung ist am Gehäuse ein Druckluftanschluss vorgesehen, über den gesteuert Druckluft zugeführt wird. Ferner ist dem Anschlag eine Dämpfungseinrichtung zugeordnet, so dass die Bewegung der angeschlagenen Werkstücke abgedämpft werden kann. Die Bewegung des Anschlagglieds erfolgt durch eine vertikale Auf- bzw. Abwärtsbewegung, die durch einen senkrecht zur Bewegungsebene der Gegenstände hervorgerufenen Auf- bzw. Abwärtshub des Stellkolbens hervorgerufen wird. Der Hubweg des Stellkolbens hat also maßgeblich Einfluss auf die Bauhöhe des Anschlagmoduls.

In der Regel sind automatische Bearbeitungs- und Fördereinrichtungen, für die das Anschlagmodul in bevorzugter Weise eingesetzt wird, ständig in Betrieb, so dass ein angeschlagener Gegenstand in Arbeitsbewegungsrichtung auf das Anschlagglied gedrückt wird. Durch die vom anschlagenden Gegenstand auf das Anschlagglied ausgeübte Anpresskraft entsteht beim Absenken des Anschlagglieds nicht unerhebliche Reibung. Der vom Stellglied zu leistende Kraftaufwand für das Absenken des Anschlagglieds ist dementsprechend groß.

Aufgabe der Erfindung ist es, ein Anschlagmodul der eingangs erwähnten Art zu schaffen, das gegenüber herkömmlichen Anschlagmodulen geringere Bauabmessungen, insbesondere geringere Bauhöhe, aufweist und mit dem dennoch das Absenken des Anschlagglieds zuverlässig durchgeführt werden kann.

Diese Aufgabe wird durch ein Anschlagmodul mit den Merkmalen des unabhängigen Anspruches 1 gelöst. Weiterbildungen der Erfindung sind in den Unteransprüchen dargestellt.

Das erfindungsgemäße Anschlagmodul zeichnet sich dadurch aus, dass die Hebeleinrichtung zur Kraftübersetzung einer vom Stellglied erzeugten Antriebskraft in eine am Anschlagglied abgreifbaren größeren Kraft ausgelegt ist, derart, dass die erste Schwenkachse des ersten Hebels am Antriebselement des Stellglieds angeordnet ist, wodurch die erste Schwenkachse bei der linearen Antriebsbewegung des Antriebselements mitgenommen und linear verschoben wird, und wobei der zweite hebel um eine an der Grundeinheit ausgebildöten ortsfesten Schwenkachse schwenkbar gelagert ist.

Durch die parallel zur Bewegungsebene gerichtete lineare Antriebsbewegung spielt der Hubweg des Antriebselementes für die Bauhöhe des Anschlagmoduls keine Rolle.

In besonders bevorzugter Weise ist das Antriebselement in einer parallel zur Bewegungsebene in der Grundeinheit ausgebildeten Antriebsaufnahme linear verschieblich angeordnet.

Zweckmäßigerweise ist das Stellglied mit seiner Längsseite im Wesentlichen parallel zur Bewegungsebene ausgerichtet in der Antriebsaufnahme angeordnet.

Eine Reduzierung der Bauabmessungen wird dadurch erzielt, dass die Umsetzmittel als Kraftübersetzungsmittel zur Kraftübersetzung einer vom Stellglied erzeugten Antriebskraft in eine am Anschlagglied abgreifbaren größeren Kraft ausgebildet sind. Dadurch können auch Stellglieder eingesetzt werden, die zwar relativ geringe Antriebskraft erzeugen, insgesamt jedoch relativ klein dimensioniert sind, da über die Kraftübersetzung die notwendige Kraft für die Auf- bzw. Abwärtsbewegung des Anschlagglieds erzeugt werden kann.

Als Stellglieder kommen elektrische und/oder fluidische Linearantriebe in Frage. Als elektrischer Linearantrieb kann beispielsweise ein elektrischer Dreh-Linearantrieb in Form eines Spindelantriebs oder ein Servomotor eingesetzt werden. Als fluidischer Linearantrieb kann beispielsweise ein pneumatisch betätigbarer Arbeitszylinder eingesetzt werden.

Die Kraftübersetzungsmittel werden von einer Hebelübersetzung gebildet.

Als Hebelübersetzung ist eine Hebeleinrichtung vorgesehen, die mit dem Anschlagglied verbunden ist, mit einem ersten Hebel, der einerseits gelenkig am Stellglied gelagert und linear verschieblich ist, und andererseits an einem Stellelement ausgebildeten zweiten Hebel gelenkig gelagert ist, wobei Letzterer einerseits um eine an der Grundeinheit ausgebildeten, ortsfesten Schwenkachse schwenkbar und andererseits gelenkig am Anschlagglied gelagert ist.

Bei einer Weiterbildung der Erfindung ist eine mit dem Anschlagglied verbundene Dämpfungseinrichtung zur gedämpften Bewegung des Anschlagglieds von einer in Arbeitsbewegungsrichtung vor der Anschlagstellung liegenden Voranschlagstellung bis zur Anschlagstellung vorgesehen. Die Dämpfungseinrichtung kann einen als zweiten Hebel ausgebildeten Dämpfungszylinder aufweisen.

Bei einer Weiterbildung der Erfindung besitzt das Anschlagmodul eine Führungseinrichtung, mit wenigstens einer Führungsbahn, auf der das Anschlagglied an einer ersten Stelle zwischen der Anschlagstellung und der Freigabestellung zwangsgeführt ist, wobei das Anschlagglied an einer von der ersten Stelle entfernten zweiten Stelle mit einem Stellelement derart verbunden ist, dass bei einer Absenkbewegung des Anschlagglieds zwischen der Anschlagstellung und der Freigabestellung ein Verschwenken des Anschlagglieds in Arbeitsbewegungsrichtung erfolgt.

Bei dem vorstehend erwähnten Stand der Technik wird das Absenken des Anschlagglieds durch eine vertikale Absenkbewegung durchgeführt. Beim Absenken des Anschlagglieds entsteht folglich auf Grund des hohen Anpressdrucks des angeschlagenen Gegenstands hohe Reibung. Der vom Stellglied zu leistende Kraftaufwand ist hoch. Demgegenüber wird das Anschlagglied beim Absenken in Arbeitsbewegungsrichtung verschwenkt, so dass der angeschlagene Gegenstand bereits beim Absenken des Anschlagglieds, wenn sich dieses noch in der Bewegungsebene befindet, in Arbeitsbewegungsrichtung weitertransportierbar ist.

Bevorzugte Ausführungsbeispiele der Erfindung sind in der Zeichnung dargestellt und werden im Folgenden näher erläutert. In der Zeichnung zeigen:
- Figur 1: ein erstes Ausführungsbeispiel des erfindungsgemäßen Anschlagmoduls in perspektivischer Ansicht,
- Figur 2: das Anschlagmodul von Figur 1 in Seitenansicht,
- Figur 3: das Anschlagmodul von Figur 1 in Rückansicht, entgegen der Arbeitsbewegungsrichtung der Gegenstände
- Figur 4: das Anschlagmodul von Figur 3 im Längsschnitt entlang der Linie IV-IV aus Figur 3,
- Figur 5: eine Rückansicht auf das Anschlagmodul von Figur 1, wobei sich das Anschlagglied im eingefahrenen Zustand befindet,
- Figur 6: das Anschlagmodul von Figur 5 im Längsschnitt entlang der Linie VI-VI aus Figur 5,
- Figur 7: das Anschlagmodul von Figur 2 im Schnitt entlang der Linie VII-VII aus Figur 2,
- Figur 8: ein zweites Ausführungsbeispiel des erfindungsgemäßen Anschlagmoduls im Längsschnitt,
- Figur 9: ein drittes Ausführungsbeispiel des erfindungsgemäßen Anschlagmoduls im Längsschnitt und
- Figuren 10A bis 10C: eine schematische Darstellung des erfindungsgemäßen Anschlagmoduls im Einsatz an einer automatischen Fördereinrichtung, wobei in drei aufeinanderfolgenden Schritten A bis C die Freigabe eines angeschlagenen Gegenstandes durch Absenken des Anschlagglieds dargestellt ist.

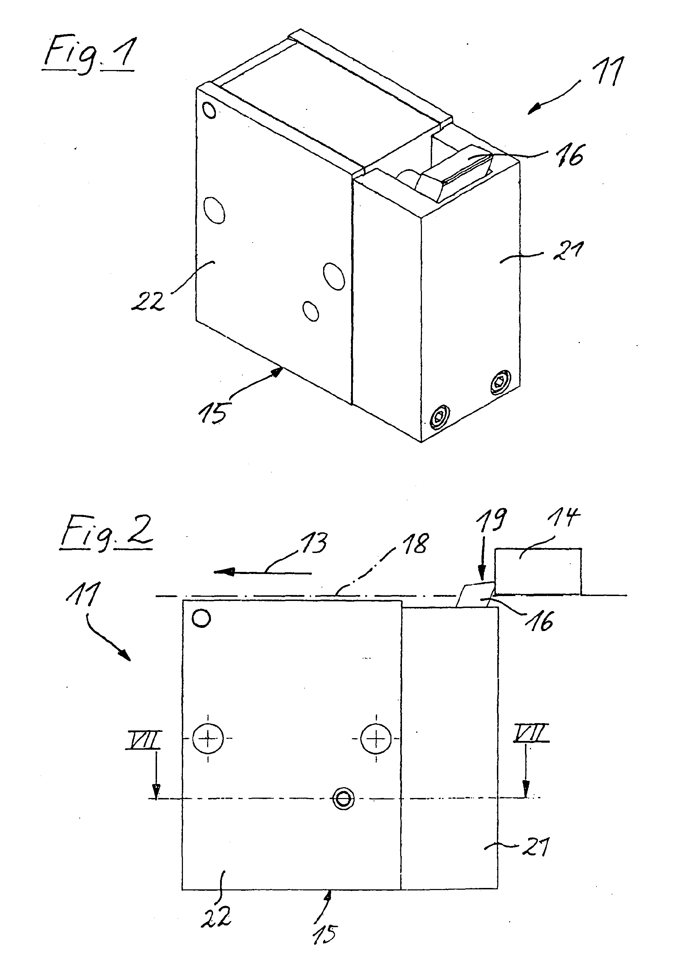

Die Figuren 1 bis 7 zeigen ein erstes Ausführungsbeispiel des erfindungsgemäßen Anschlagmoduls 11, das im Folgenden beispielhaft anhand eines solchen mit Dämpfungseinrichtung 12 erläutert wird. Es ist jedoch auch möglich, ein Anschlagmodul ohne Dämpfungseinrichtung zu verwenden.

Das Anschlagmodul 11 wird vorzugsweise in automatischen Bearbeitungs- und Fördereinrichtungen 70 eingesetzt, um sich in einer Bewegungsebene 18 in einer Arbeitsbewegungsrichtung 13 bewegende Gegenstände 14, beispielsweise Werkstücke oder dergleichen, zu vereinzeln. Nach der Vereinzelung können die Gegenstände 14 dann individuell behandelt, beispielsweise bearbeitet, umgeleitet usw. werden.

Das Anschlagmodul 11 besitzt eine beispielsweise quaderförmig ausgebildete Grundeinheit 15, an dem ein Anschlagglied 16 angeordnet ist, das mittels eines Stellglieds 17 aus der Bewegungsebene 18 der Gegenstände 14 heraus und in diese zurück bewegbar ist. Ferner ist noch die bereits erwähnte Dämpfungseinrichtung 12 vorgesehen, mittels der das Anschlagglied 16 von einer in Arbeitsbewegungsrichtung 13 vor einer Anschlagstellung 20 liegenden Voranschlagstellung 19 bis zur Anschlagstellung 20 gedämpft bewegbar ist.

Es ist möglich, dass die Grundeinheit 15 aus einem Anschlaggliedträger 21, in dem das Anschlagglied 16 in nachfolgend noch näher beschriebener Weise untergebracht ist, und einem separat vom Anschlaggliedträger 21 ausgebildeten Stellgliedträger 22 besteht. Prinzipiell ist jedoch auch eine einteilig aufgebaute Grundeinheit 15 denkbar.

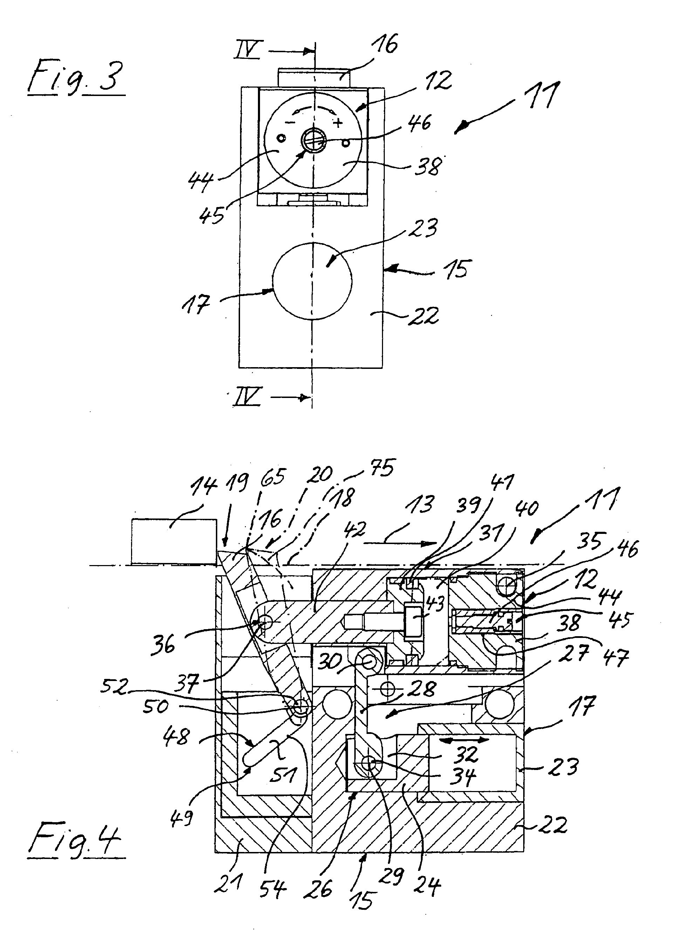

Wie insbesondere in Figur 4 dargestellt, ist als Stellglied 17 ein elektrischer Linearantrieb in Form eines Elektromagnet-Antriebs vorgesehen. Der Elektromagnet-Antrieb besitzt einen bestrombaren Elektromagneten 23, mit insbesondere U-förmigem Joch, in dem ein Antriebselement 24 in Form eines Ankers linear verschieblich geführt ist. Bei Bestromung des Elektromagneten wird der Anker zum Joch hingezogen, wodurch eine abgreifbare Antriebsbewegung erzeugt wird. Die Antriebsbewegung findet parallel zur Bewegungsebene 18 der Gegenstände 14 statt und wird über Umsetzmittel in nachfolgend näher beschriebener Weise auf das Anschlagglied 16 übertragen, das dadurch zwischen seiner Anschlagstellung 20 und einer unterhalb der Bewegungsebene liegenden Freigabestellung 25 bewegbar ist. Das als Anker ausgebildete Antriebselement 24 wird ferner noch linear in einer in der Grundeinheit 15, insbesondere im Stellgliedträger 22 ausgebildeten Antriebsaufnahme 26 geführt. Ferner ist der Elektromagnet 23 mit der Längsachse ebenfalls im Wesentlichen parallel zur Bewegungsebene 18 ausgerichtet in der Antriebsaufnahme 26 angeordnet. Die parallel zur Bewegungsebene 18 erzeugte lineare Antriebsbewegung hat den Vorteil, dass der Stellweg bzw. Hub des Antriebselements 24 in horizontaler Richtung verläuft und damit auf die Bauhöhe des Anschlagmoduls 11 keinen Einfluss nimmt. Auch der Elektromagnet 23 hat durch seine horizontale Lage relativ geringen Einfluss auf die Bauhöhe.

Eine weitere Verringerung der Bauhöhe und sogar der gesamten Baugröße des Anschlagmoduls 11 kann durch die Verwendung relativ klein dimensionierter Stellglieder 17 in Kombination mit Umsetzmitteln in Form von Kraftübersetzungsmitteln erfolgen, so dass auch eine vom Stellglied 17 erzeugte relativ geringe Antriebskraft zur Bewegung des Antriebsglieds ausreicht, da diese über die Kraftübersetzung in eine höhere Kraft übersetzt wird.

Als Kraftübersetzungsmittel ist eine Hebelübersetzung vorgesehen, mit einer Hebeleinrichtung 27, die zwischen dem Anker des Elektromagneten 23 und dem Anschlagglied 16 ausgebildet ist. Die Hebeleinrichtung 27 besitzt einen ersten Hebel 28, der einerseits um eine erste Schwenkachse 29 schwenkbar am Anker und andererseits um eine zweite Schwenkachse 30 schwenkbar mit einem zweiten Hebel 31 verbunden ist.

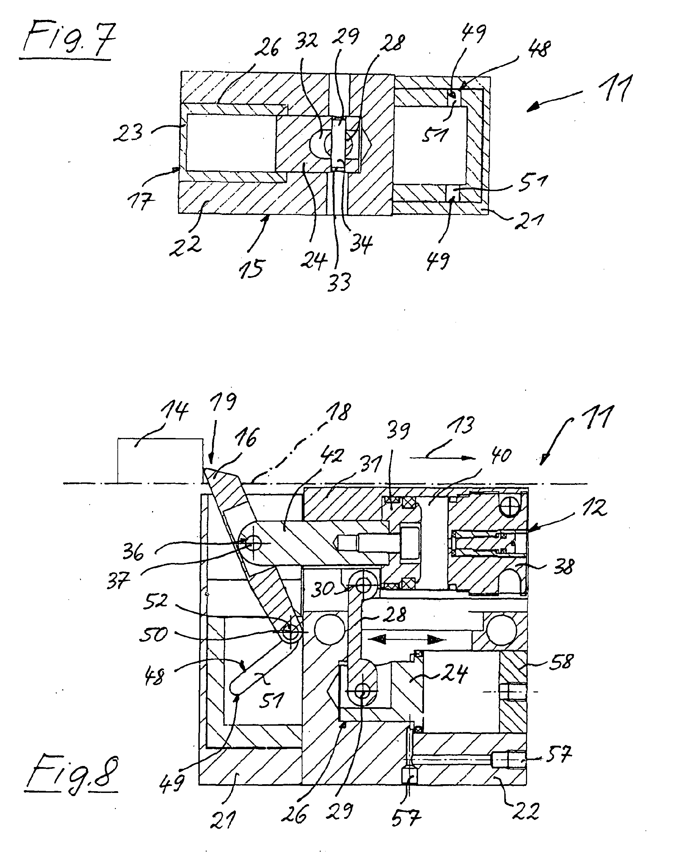

Wie insbesondere in Figur 7 dargestellt, befindet sich hierzu am Anker eine schlitzartige Öffnung 32 zur Aufnahme des Endes des ersten Hebels 28, wobei am Hebelende seinerseits wiederum eine Durchgangsöffnung 33 vorgesehen ist, durch die ein Bolzen 34 hindurchgeführt ist. Der Bolzen 34 wiederum ist am Anker drehbar gelagert und bildet mithin die erste Schwenkachse 29. Die Schwenklagerung am gegenüberliegenden Hebelende des ersten Hebels 28 kann in ähnlicher Weise erfolgen. Der zweite Hebel 31 ist einerseits an einer an der Grundeinheit 15 ausgebildeten ortsfesten dritten Schwenkachse 35 schwenkbar gelagert und andererseits an einer zweiten Stelle 36 über eine vierte Schwenkachse 37 schwenkbar mit dem Anschlagglied 16 verbunden.

Der zweite Hebel 31 wird von einem Dämpfungszylinder 38 der Dämpfungseinrichtung 12 gebildet. Dieser besitzt einen Zylinderraum 40, in dem ein Dämpfungskolben 39 verschiebbar geführt und mittels einer Kolbendichtungseinrichtung 41 gegen die Wandung des Zylinderraums 40 abgedichtet ist. Der Dämpfungskolben 39 ist mit einer Kolbenstange 42 über Befestigungsmittel, beispielsweise mittels einer Schraubverbindung 43, verbunden. Es ist selbstverständlich auch möglich, eine einstückige Verbindung zwischen Dämpfungskolben 39 und Kolbenstange 42 vorzusehen.

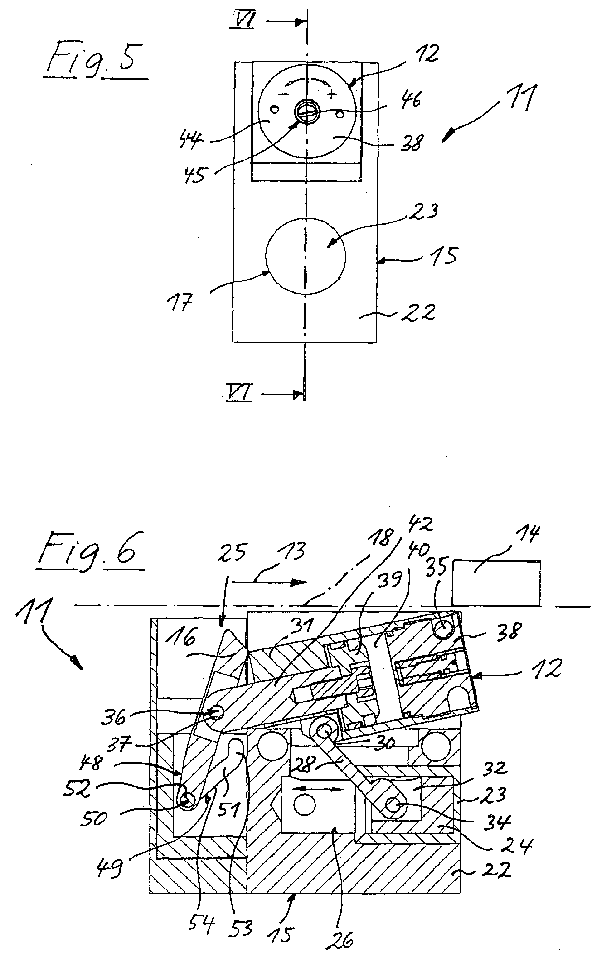

Am kolbenfernen Ende ist die Kolbenstange 42 wie erwähnt schwenkbar mit dem Anschlagglied 16 verbunden. Sie stellt somit das Stellelement für das Anschlagglied 16 dar. Zur Außenseite der Grundeinheit 15 hin ist der Zylinderraum 40 mit einem Deckel 44 verschlossen. Im Deckel 44 befindet sich eine Drosseleinrichtung 45, die einen Strömungswiderstand für die bei der Kolbenbewegung über einen nicht dargestellten Kanal ausströmende Luft bildet. Zur Feinjustierung der Dämpfungswirkung sind ferner Einstellmittel 46, beispielsweise eine in einem Deckelkanal 47 beweglich geführte Einstellschraube vorgesehen, mit der sich der Ausströmquerschnitt für die ausströmende Luft wahlweise verengen oder erweitern lässt, wodurch dann wiederum der Drosseleffekt erhöht oder vermindert wird, wobei letzterer wiederum die Dämpfungswirkung bestimmt. Wie insbesondere in den Figuren 3 und 5 dargestellt, wird durch Drehen an der Einstellschraube in Richtung "+" die Dämpfungswirkung erhöht, während durch Drehen der Einstellschraube in Richtung "-" die Dämpfungswirkung vermindert wird.

Das Anschlagglied 16 ist wie erwähnt an einer zweiten Stelle 36 schwenkbar mit der Kolbenstange 42 verbunden. Zusätzlich hierzu ist eine Führungseinrichtung 48 vorgesehen, mit wenigstens einer Führungsbahn 49, auf der das Anschlagsglied 16 an einer ersten Stelle 50 zwischen der Anschlagstellung 16 und der Freigabestellung 25 zwangsgeführt ist.

Wie insbesondere in Figur 6 dargestellt, weist die Führungseinrichtung 48 eine Kulissenführung auf, mit zwei an der Grundeinheit ausgebildeten Führungskulissen in Form von Führungsnuten 51 in denen ein am Anschlagglied 16 ausgebildetes Führungsglied in Form eines Führungsbolzens 52 zwangsgeführt ist. Der Führungsbolzen 52 kann sich in den Führungsnuten 51 verschwenken. Die Führungsnuten 51 besitzen jeweils einen Kopfbereich 53, der sich im Wesentlichen vertikal, also senkrecht zur Bewegungsebene 18 erstreckt. Dieser Kopfbereich 53 wird benötigt, da bereits bei der Bewegung des Anschlagglieds 16 von der Voranschlagstellung 19 in die Anschlagstellung 20 ein Verschwenken des Anschlagglieds 16 an der zweiten Stelle 36 um die vierte Schwenkachse 37 stattfindet, wobei auf Grund der Tatsache, dass die als Stellelement ausgebildete Kolbenstange 42 durch den Dämpfungskolben 39 im Zylinderraum 40 höhenunveränderlich zwangsgeführt ist, das Anschlagglied 16 ein Stück weit nach unten gedrückt wird. An den Kopfbereich 53 schließt sich mit einem Radius ein Führungsbereich 54 an, der sich entgegen der Arbeitsbewegungsrichtung 13 schräg abwärts erstreckt.

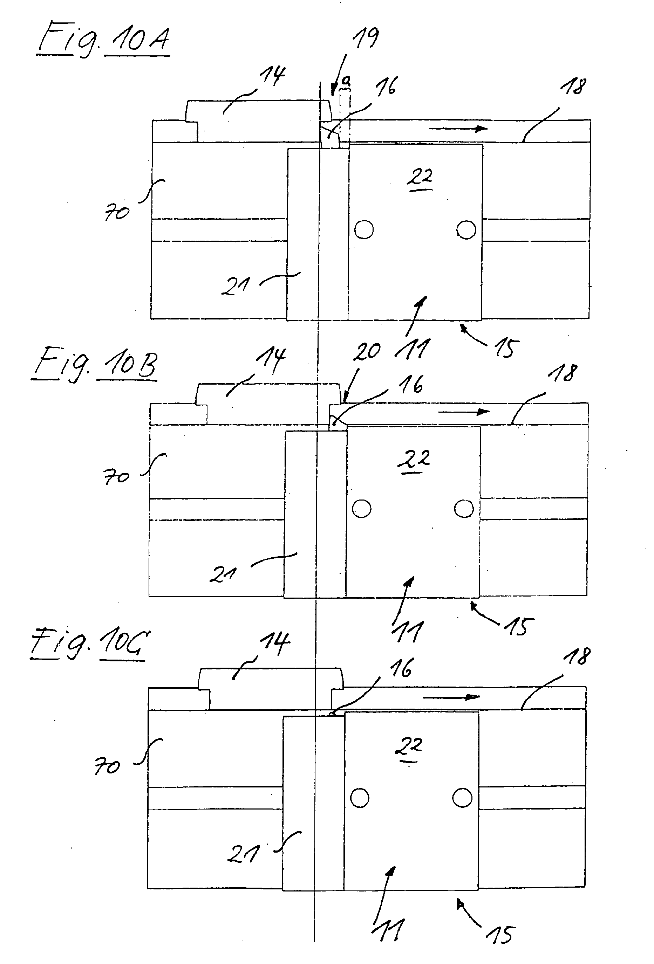

Wie in den Figuren 10A bis 10C dargestellt, besteht die Wirkungsweise des Anschlagmoduls darin, dass ein von rechts kommender Gegenstand 14, der beispielsweise auch ein Werkstück, insbesondere Maschinenteil oder dergleichen sein kann, zunächst die Voranschlagstellung 19 des Anschlagglieds 16 erreicht. Ein weiterer Vorteil ist, dass in der Voranschlagstellung 19 eine Selbsthemmung des Anschlagglieds 16 derart vorliegt, dass es nicht ohne Betätigung des Stellglieds 17 nach unten gedrückt werden kann. Durch das Auftreffen des Gegenstandes 14 wird der Dämpfungskolben 39 in den Zylinderraum 40 hineingeschoben, was zu einem abgedämpften Abbremsen des Gegenstands 14 bis zum Stillstand führt. Das Anschlagglied 16 wird in Arbeitsbewegungsrichtung 13 um die vierte Schwenkachse 37 verschwenkt und zwar so weit, bis der Dämpfungskolben 39 auf die Rückwand des Deckels 44 trifft, und somit sämtliche im Zylinderraum 40 befindliche Luft ausgeschoben ist. Eine Weiterbewegung des Dämpfungskolbens 39 in Arbeitsbewegungsrichtung 13 ist nicht mehr möglich, so dass hierdurch die Anschlagstellung 20 festgelegt ist. Wie insbesondere in Figur 10A dargestellt, ist die Rückseite des Anschlagglieds 16 in der Anschlagstellung 20 mit dem Abstand a vom Stellgliedträger 22 der Grundeinheit 15 beabstandet. Soll der Gegenstand 14 seine Bewegung in Arbeitsbewegungsrichtung 13 fortsetzen, so wird das Stellglied 17 aktiviert, in Falle des ersten Ausführungsbeispiels der Elektromagnet bestromt, so dass der Anker angezogen wird. Dabei erfolgt ein Verschwenken des ersten Hebels 28 um die erste Schwenkachse 29 bei deren gleichzeitig linearer Verschiebung. Da sich der erste Hebel 28 nicht verlängern kann, wird der Dämpfungszylinder 38 nach unten gezogen und schwenkt dabei gleichzeitig um die ortsfeste dritte Schwenkachse 35. Dies führt dazu, dass das Anschlagglied 16 in Arbeitsbewegungsrichtung 13 weiter um die vierte Schwenkachse verschwenkt wird. Dies hat den Vorteil, dass der angeschlagene Gegenstand 14 bereits beim Absenken des Anschlagglieds, wenn sich dieses noch oberhalb der Bewegungsebene 18 befindet, in Arbeitsbewegungsrichtung weitertransportierbar ist. Es ist möglich, dass angeschlagene Gegenstände 14, die sich auf ständig in Betrieb stehenden Fördereinrichtungen 70 befinden, bereits durch ihren Druck, den sie dadurch auf das Anschlagglied 16 ausüben, bewirken, dass dieses sich in Arbeitsbewegungsrichtung 13 verschwenkt.

Gleichzeitig läuft der Führungsbolzen 52 im Führungsbereich 54 der Führungsnuten 51 schräg nach unten entgegen der Arbeitsbewegungsrichtung 13. Durch diesen Verlauf der jeweiligen Führungsbereiche 54 wird erreicht, dass bereits beim Absenken des Anschlagglieds die Kolbenstange 42 wieder aus dem Dämpfungszylinder 38 herausgezogen wird. Das untere Ende der jeweiligen Führungsbereiche 54 bildet schließlich die Freigabestellung 25. In der Freigabestellung 25 ist das Anschlagglied 16 vollständig unterhalb der Bewegungsebene 18 angeordnet, so dass ein angeschlagener Gegenstand 14 über das Anschlagmodul 11 hinaus weitertransportiert werden kann. Beim anschließenden Hochfahren des Anschlagglieds, um einen nachfolgenden Gegenstand 14 zu stoppen bzw. zu vereinzeln, bleibt die Kolbenstange 42 in ihrer ausgestellten Position, so dass das Anschlagglied automatisch wieder in die in Figur 10A gezeigte Voranschlagstellung 19 positioniert wird.

Figur 8 zeigt ein zweites Ausführungsbeispiel des erfindungsgemäßen Anschlagmoduls 11, das sich vom ersten Ausführungsbeispiel dadurch unterscheidet, dass an Stelle eines elektrischen Linearantriebs ein fluidischer Linearantrieb verwendet wird. Vorzugsweise wird ein pneumatischer Linearantrieb verwendet. In diesem Fall ist ein Antriebselement 24 in Form eines Antriebskolbens vorgesehen, der linear verschieblich in der Antriebsaufnahme 26 geführt ist. Am Antriebskolben ist dann wieder in bereits vorstehend beschriebener Weise der erste Hebel 28 angelenkt. Zum Antrieb des Antriebskolbens zum Zwecke des Absenkens des Anschlagglieds 16 wird die dem ersten Hebel 28 zugewandte Kolbenseite über einen Zuführkanal 57 mit Druckluft beaufschlagt, wodurch sich der Antriebskolben in Arbeitsbewegungsrichtung 13 bewegt. Die Antriebsaufnahme 26 ist mit einem Deckel 58 verschlossen, so dass eine Kolbenkammer gebildet wird, in der der Antriebskolben geführt ist. Zur Rückbewegung des Kolbens in seine in Figur 8 dargestellte Stellung wird die gegenüberliegende Kolbenseite mit Druckluft beaufschlagt.

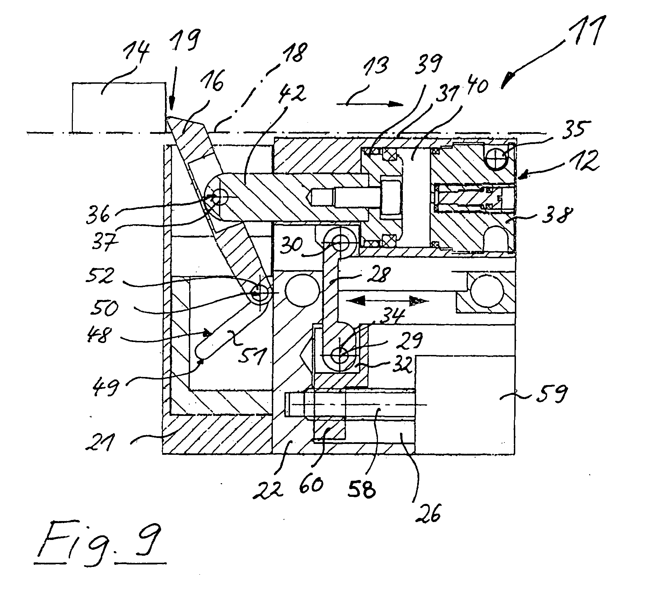

Figur 9 zeigt ein drittes Ausführungsbeispiel des erfindungsgemäßen Antriebsmoduls 11, das sich von den zuvor beschriebenen Ausführungsbeispielen dadurch unterscheidet, dass ein elektrischer Dreh-Linearantrieb in Form eines Spindelantriebs eingesetzt wird. Der Spindelantrieb besitzt eine drehbar angetriebenes Antriebselement 24 in Form einer Spindelmutter, die gleichzeitig parallel zur Bewegungsebene 18 linear verschieblich am Spindelmotor 59 gelagert ist. An der Spindelmutter 58 befindet sich ein Mitnehmer 60, der durch die Linearverschiebung der Spindelmutter 58 ebenfalls linear mit verschoben wird. An den Mitnehmer 60 ist wiederum der erste Hebel 28 angelenkt.

## Patentansprüche

1. Anschlagmodul, insbesondere für automatische Bearbeitungs- und Fördereinrichtungen, mit einem an einer Grundeinheit (15) angeordneten Anschlagglied (16) für sich in einer Bewegungsebene (18) in einer aktuellen Arbeitsbewegungsrichtung (13) bewegende Gegenstände (14), das mittels eines Stellglieds (17) zwischen einer in der Bewegungsebene (18) befindlichen Anschlagstellung (20) und einer unterhalb der Bewegungsebene (18) liegende Freigabestellung (25) bewegbar ist, wobei das Stellglied (17) ein Antriebselement (24) zur Erzeugung einer parallel zur Bewegungsebene (18) gerichteten linearen Antriebsbewegung aufweist, die über eine Hebeleinrichtung (27) in eine zwischen der Anschlagstellung (20) und der Freigabestellung (25) des Anschlagglieds (16) stattfindenden Auf- bzw. Abwärtsbewegung umsetzbar ist, wobei die Hebeleinrichtung (27) einen durch das Antriebselement (24) bewegbaren ersten Hebel (28) aufweist, der um eine erste Schwenkachse (29) schwenkbar ist und an einem zweiten Hebel (31) gelenkig gelagert ist, wobei Letzterer gelenkig am Anschlagglied (16) gelagert ist, **dadurch gekennzeichnet, dass** die Hebeleinrichtung (27) zur Kraftübersetzung einer vom Stellglied (17) erzeugten Antriebskraft in eine am Anschlagglied (16) abgreifbaren größeren Kraft ausgelegt ist, derart, dass die erste Schwenkachse (29) des ersten Hebels (28) am Antriebselement (24) des Stellglieds (17) angeordnet ist, wodurch die erste Schwenkachse (29) bei der linearen Antriebsbewegung des Antriebselements (24) mitgenommen und linear verschoben wird, und wobei der zweite Hebel (31) um eine an der Grundeinheit (15) ausgebildeten ortsfesten Schwenkachse (35) schwenkbar gelagert ist.

2. Anschlagmodul nach Anspruch 1, **dadurch gekennzeichnet, dass** das Antriebselement (24) in einer parallel zur Bewegungsebene (18), in der Grundeinheit (15) ausgebildeten Antriebsaufnahme (26) linear verschieblich angeordnet ist.

3. Anschlagmodul nach Anspruch 1 oder 2, **dadurch gekennzeichnet, dass** das Stellglied (17) mit seiner Längsseite im Wesentlichen parallel zur Bewegungsebene (18) ausgerichtet in der Antriebsaufnahme (26) angeordnet ist.

4. Anschlagmodul nach einem der vorhergehenden Ansprüche, **dadurch gekennzeichnet, dass** als Stellglied (17) ein elektrischer und/oder fluidischer Linearantrieb vorgesehen ist.

5. Anschlagmodul nach einem der vorhergehenden Ansprüche, **gekennzeichnet durch** eine mit dem Anschlagglied (16) verbundene Dämpfungseinrichtung (12) zur gedämpften Bewegung des Anschlagglieds (16) von einer in Arbeitsbewegungsrichtung (13) vor der Anschlagstellung (20) liegenden Voranschlagstellung (19) bis zur Anschlagstellung (20).

6. Anschlagmodul nach Anspruch 7, **dadurch gekennzeichnet, dass** die Dämpfungseinrichtung einen als zweiten Hebel ausgebildeten Dämpfungszylinder (38) aufweist.

7. Anschlagmodul nach einem der vorhergehenden Ansprüche, **dadurch gekennzeichnet, dass** eine Führungseinrichtung (48) vorgesehen ist, mit wenigstens einer Führungsbahn (49), auf der das Anschlagglied (16) an einer ersten Stelle (50) zwischen der Anschlagstellung (20) und der Freigabestellung (25) zwangsgeführt ist, wobei das Anschlagglied (16) an einer von der ersten Stelle (50) entfernten zweiten Stelle (36) mit einem Stellelement derart schwenkbar verbunden ist, dass bei einer Absenkbewegung des Anschlagglieds (16) von der Anschlagstellung (20) in die Freigabestellung (25) ein Verschwenken des Anschlagglieds (16) in Arbeitsbewegungsrichtung (13) erfolgt.

8. Anschlagmodul nach Anspruch 9, **dadurch gekennzeichnet, dass** die Führungsbahn (49) zumindest teilweise schräg zur Bewegungsebene (18) verläuft.

## Claims

1. Stop module, in particular for automatic machining and handling devices, with a stop member (16) located on a base unit (15) for objects (14) moving in a plane of motion (18) in a current working movement direction (13), which is movable by means of an actuator (17) between a stop position (20) in the plane of motion (18) and a release position (25) below the plane of motion (18), wherein the actuator (17) comprises a drive element (24) for the generation of a linear drive movement oriented parallel to the plane of motion (18) and convertible by means of a lever device (27) into an upward and/or downward movement between the stop position (20) and the release position (25) of the stop member (16), wherein the lever device (27) comprises a first lever (28) movable by the drive element (24), pivotable about a first pivot axis (29) and pivotably mounted on a second lever (31), the latter being pivoted on the stop member (16), **characterised in that** the lever device (27) is designed for converting the driving force generated by the actuator (17) into a higher force which can be taken off at the stop member (16) such that the first pivot axis (29) of the first lever (28) is located on the drive element (24) of the actuator (17), whereby the first pivot axis (29) is carried along and displaced in a linear manner during the linear drive movement of the drive element (24), and wherein the second lever (31) is pivoted about a stationary pivot axis (35) provided on the base unit (15).

2. Stop module according to claim 1, **characterised in that** the drive element (24) is capable of linear displacement in a drive recess (26) provided parallel to the plane of motion (18) in the base unit (15).

3. Stop module according to claim 1 or 2, **characterised in that** the long side of the actuator (17) is disposed in the drive recess (26) substantially parallel to the plane of motion (18).

4. Stop module according to any of the preceding claims, **characterised in that** an electric and/or hydraulic linear drive is provided as an actuator (17).

5. Stop module according to any of the preceding claims, **characterised by** a damping device (12) connected to the stop member (16) for the damped movement of the stop member (16) from a pre-stop position (19) located in front of the stop position (20) in the working movement direction (13) to the stop position (20).

6. Stop module according to claim 7, **characterised in that** the damping device comprises a damping cylinder (38) designed as the second lever.

7. Stop module according to any of the preceding claims, **characterised in that** a guide device (48) is provided, with at least one guideway (49), on which the stop member (16) is positively guided at a first point (50) between the stop position (20) and the release position (25), wherein the stop member (16) is at a second point (36) remote from the first point (50) pivotably connected to an actuating element such that the stop member (16) is pivoted in the working movement direction (13) as the stop member (16) is lowered from the stop position (20) into the release position (25).

8. Stop module according to claim 9, **characterised in that** the guideway (49) runs at least partially at an angle relative to the plane of motion (18).

## Revendications

1. Module de butée, en particulier pour des dispositifs d'usinage et de transport automatiques, avec un organe de butée (16) disposé sur une unité de base (15) pour des objets (14) se déplaçant dans un plan de déplacement (18) dans un sens de déplacement de travail (13) réelle, lequel peut être déplacé au moyen d'un organe d'actionnement (17) entre une position de butée (20) se trouvant dans le plan de déplacement (18) et une position de libération (25) se trouvant en dessous du plan de déplacement (18), l'organe d'actionnement (17) présentant un élément d'entraînement (24) pour générer un mouvement d'entraînement linéaire dirigé parallèlement au plan de déplacement (18), qui peut être converti par le biais d'un dispositif à levier (27) en un déplacement ascendant ou descendant ayant lieu entre la position de butée (20) et la position de libération (25) de l'organe de butée (16), le dispositif à levier (27) présentant un premier levier (28) mobile grâce à l'élément d'entraînement (24), lequel peut être pivoté autour d'un premier axe de pivotement (29) et est monté de manière articulée sur un deuxième levier (31), ce dernier étant monté de manière articulée sur l'organe de butée (16), **caractérisé en ce que** le dispositif à levier (27) est conçu pour transformer une force d'entraînement générée par l'organe d'actionnement (17) en une force supérieure pouvant être récupérée sur l'organe de butée (16) de telle sorte que le premier axe de pivotement (29) du premier levier (28) soit disposé sur l'élément d'entraînement (24) de l'organe d'actionnement (17), grâce à quoi le premier axe de pivotement (29) est entraîné et déplacé linéairement lors du mouvement d'entraînement linéaire de l'élément d'entraînement (24), et le deuxième levier (31) étant monté à pivotement autour d'un axe de pivotement (35) fixe réalisé sur l'unité de base (15).

2. Module de butée selon la revendication 1, **caractérisé en ce que** l'élément d'entraînement (24) est disposé à déplacement linéaire dans un logement d'entraînement (26) réalisé dans l'unité de base (15), parallèlement au plan de déplacement (18).

3. Module de butée selon la revendication 1 ou 2, **caractérisé en ce que** l'organe d'actionnement (17) est disposé avec son côté longitudinal orienté essentiellement parallèlement au plan de déplacement (18) dans le logement d'entraînement (26).

4. Module de butée selon l'une quelconque des revendications précédentes, **caractérisé en ce qu'**un entraînement linéaire électrique et/ou fluidique est prévu comme organe d'actionnement (17).

5. Module de butée selon l'une quelconque des revendications précédentes, **caractérisé par** un dispositif d'amortissement (12) relié à l'organe de butée (16) destiné à amortir le déplacement de l'organe de butée (16) d'une position de butée escamotable (19) se trouvant dans le sens de déplacement de travail (13) avant la position de butée (20) à une position de butée (20).

6. Module de butée selon la revendication 7, **caractérisé en ce que** le dispositif d'amortissement présente un tube d'amortissement (38) réalisé comme un deuxième levier.

7. Module de butée selon l'une quelconque des revendications précédentes, **caractérisé en ce qu'**un dispositif de guidage (48) est prévu, avec au moins une voie de guidage (49), sur laquelle l'organe de butée (16) est guidé de manière forcée à une première position (50) entre la position de butée (20) et la position de libération (25), l'organe de butée (16) étant relié à pivotement à une deuxième position (36) éloignée de la première position (50) à un élément d'actionnement de telle sorte que lors d'un mouvement d'abaissement de l'organe de butée (16) de la position de butée (20) à la position de libération (25), l'organe de butée (16) pivote dans le sens de déplacement de travail (13).

8. Module de butée selon la revendication 9, **caractérisé en ce que** la voie de guidage (49) s'étend au moins en partie en biais par rapport au plan de déplacement (18).
